# EUROPEAN PATENT APPLICATION

(11) **EP 4 550 736 A1**
(43) Date of publication of application: **07.05.2025**
(21) Application number: 22948596.6
(22) Date of filing: 30.06.2022
(51) Int. Cl.: H04L 27/00, H04W 52/02, H04W 76/20

(54) **STATE DETERMINATION METHOD AND APPARATUS, DEVICE, STORAGE MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN); XU, Weijie, Dongguan, Guangdong 523860 (CN)
(74) Representative: RGTH
(86) International application number: PCT/CN2022/103080
(87) International publication number: WO 2024/000493

(57) **Abstract**

A state determination method and apparatus (1000), a device (1100), a storage medium and a program product. The method comprises: in a first state, according to a wake-up signal, a terminal device (10) remaining at the first state or switching to a second state (510); and in the second state, according to the signal strength of a reference signal, the terminal device (10) remaining at the second state or switching to the first state (520). In different states, by means of reception and measurement of different target signals, a proper state is selected so as to save power.

## Description

### TECHNICAL FIELD

Embodiments of the present application relate to the field of communication technology, and in particular, to a state determination method and apparatus, a device, a storage medium, and a program product.

### BACKGROUND

In the related art, a terminal power saving mechanism based on a wake up receiver is introduced for saving power in a terminal. Using this mechanism, the terminal device can switch between a low power consumption state and a normal power consumption state.

In the low power consumption state, the terminal device only turns on the wake up receiver and turns off a main receiver, and the terminal device receives a wake up signal by using the wake up receiver. When receiving the wake up signal using the wake up receiver in the low power consumption state, the terminal device may switch to the normal power consumption state. In the normal power consumption state, the terminal device turns on the main receiver, and receives, by using the main receiver, synchronization signals, downlink control signals, downlink data, etc., transmitted by a network device.

At present, further research is needed for the state determination and switching of terminal devices to enhance the power saving performance of the terminal devices.

### SUMMARY

A state determination method and apparatus, a device, a storage medium, and a program product are provided in the embodiments of the present application. The technical solutions are as follows.

In accordance with an aspect of the embodiments of the present application, a state determination method is provided. The method is performed by a terminal device and includes:
in a first state, maintaining a first state or switching to a second state according to a wake up signal;
   and/or
in the second state, maintaining the second state or switching to the first state according to signal strength of a reference signal;
where the first state and the second state are different.

In accordance with an aspect of the embodiments of the present application, a state determination apparatus is provided. The apparatus includes:
a first processing module, configured to, in a first state, maintain a first state or switch to a second state according to a wake up signal;
   and/or
a second processing module, configured to, in the second state, maintain the second state or switch to the first state according to signal strength of a reference signal;
where the first state and the second state are different.

In accordance with an aspect of the embodiments of the present application, a terminal device is provided. The terminal device includes a processor and a memory, the memory stores a computer program therein, and the processor executes the computer program to implement the above method.

In accordance with an aspect of the embodiments of the present application, a computer-readable storage medium is provided, and a computer program is stored in the storage medium. The computer program is used to be executed by a processor to implement the above method.

In accordance with an aspect of the embodiments of the present application, a chip is provided. The chip includes a programmable logic circuit and/or program instructions, and when being running, the chip is configured to implement the above method.

In accordance with an aspect of the embodiments of the present application, a computer program product is provided. The computer program product includes computer instructions stored in a computer-readable storage medium, and a processor reads the computer instructions from the computer-readable storage and executes the computer instructions to implement the above method.

The technical solutions provided by the embodiments of the present application may have the following beneficial effects.

In the first state, the terminal device maintains the first state or switches to the second state according to the wake up signal. In the second state, the terminal device maintains the second state or switches to the first state according to the signal strength of the reference signal. Thus, in different states, by receiving and measuring different target signals (such as a wake up signal or a reference signal), the terminal device chooses to enter an appropriate state to achieve the purpose of power saving.

### BRIEF DESCRIPTION OF THE DRAWINGS

FIG. 1 is a schematic diagram of a network architecture provided by an embodiment of the present application.
FIG. 2 is a schematic diagram of a DRX mechanism provided by an embodiment of the present application.
FIG. 3 is a schematic diagram of saving power consumption in a dormancy mode provided by an embodiment of the present application.
FIG. 4 is a block diagram of a receiver system based on zero-power wake up provided by an embodiment of the present application.
FIG. 5 is a flow chart of a state determination method provided by an embodiment of the present application.
FIG. 6 is a schematic diagram of an amplitude modulation for a wake up signal provided by an embodiment of the present application.
FIG. 7 is a schematic diagram of coverage of a wake up signal and a reference signal provided by an embodiment of the present application.
FIG. 8 is a schematic diagram of state transition performed by a terminal device according to an embodiment of the present application.
FIG. 9 is a schematic diagram of coverage of a wake up signal and a reference signal provided by another embodiment of the present application.
FIG. 10 is a block diagram of a state determination apparatus provided by an embodiment of the present application.
FIG. 11 is a schematic diagram of a structure of a terminal device provided by an embodiment of the present application.

### DETAILED DESCRIPTION

In order to make the objectives, technical solutions and advantages of the present application clearer, implementations of the present application will be further described in detail below with reference to the accompanying drawings.

A network architecture and service scenarios described in the embodiments of the present application are intended to illustrate the technical solutions of the embodiments of the present application more clearly, and do not constitute a limitation on the technical solutions provided in the embodiments of the present application. A person of ordinary skill in the art may appreciate that with the evolution of the network architecture and the emergence of new service scenarios, the technical solutions provided in the embodiments of the present application are also applicable to similar technical problems.

The technical solutions of the embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an NR system evolution system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area networks (WLAN), a wireless fidelity (WiFi), a fifth-generation communication (5th-Generation, 5G) system, and other communication systems.

Generally speaking, a limited number of connections are supported by traditional communication systems and are easy to be implemented. However, with the development of communication technology, mobile communication systems will not only support traditional communications, but will also support, for example, device to device (D2D) communication, machine to machine (M2M) communication, machine type communication (MTC), vehicle to vehicle (V2V) communication, or vehicle to everything (V2X) communication. The embodiments of the present application may also be applied to these communication systems.

The communication system in the embodiments of the present application may be applied to a carrier aggregation (CA) scenario, a dual connectivity (DC) scenario, or a standalone (SA) networking scenario.

The communication system in the embodiments of the present application may be applied to an unlicensed spectrum, where the unlicensed spectrum may also be considered as a shared spectrum; alternatively, the communication system in the embodiments of the present application may be applied to a licensed spectrum, where the licensed spectrum may also be considered as an unshared spectrum.

The embodiments of the present application may be applied to non-terrestrial networks (NTN) systems, and may also be applied to terrestrial networks (TN) systems.

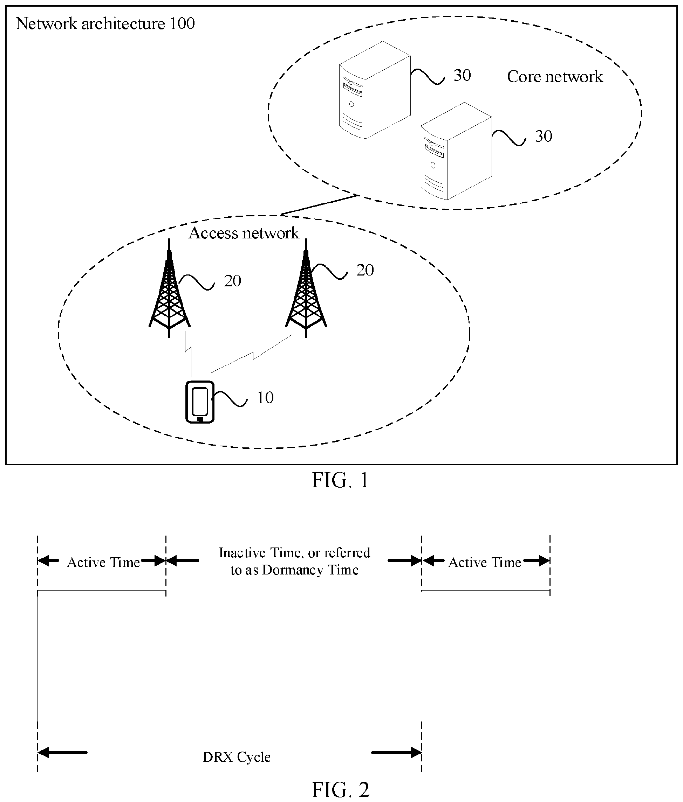

Please refer to FIG. 1, which is a schematic diagram of a network architecture 100 provided by an embodiment of the present application, the network architecture 100 may include: a terminal device 10, an access network device 20 and a core network device 30.

The terminal device 10 may be referred to as a user equipment (UE), an access terminal, a user unit, a user station, a mobile station, a mobile platform, a remote station, a remote terminal, a mobile device, a wireless communication device, a user agent, or a user apparatus. Optionally, the terminal device 10 may also be a cellular phone, a cordless phone, a session initiation protocol (SIP) phone, a wireless local loop (WLL) station, a personal digital assistant (PDA), a handheld device or computing device with wireless communication function, any of other processing devices connected to a wireless modem, a vehicle-mounted device, a wearable device, a terminal device in a 5th generation system (5GS) or public land mobile network (PLMN) evolved in the future, or the like, and the embodiments of the present application are not limited to thereto. For the convenience of description, the above-mentioned devices are all referred to as terminal devices. There are usually multiple terminal devices 10, and one or more terminal devices 10 may be distributed in a cell managed by each access network device 20. In the embodiments of the present application, "terminal equipment" and "UE" are often used interchangeably, and those skilled in the art can understand that the two generally express the same meaning.

The access network device 20 is a device deployed in the access network to provide the wireless communication function for the terminal device 10. The access network devices 20 may include macro base stations, micro base stations, relay stations, access points, etc., of various forms. In systems using different wireless access technologies, a device with access network device function may have different names, for example, in the 5G NR system, the device is called gNodeB or gNB. As communication technology evolves, the name "access network device" may change. For the convenience of description, in the embodiments of the present application, the above-mentioned devices that provide the wireless communication function for the terminal device 10 are all referred to as the access network devices. Optionally, the terminal device 10 and the core network device 30 may establish a communication relationship therebetween through the access network device 20. For example, in the long term evolution (LTE) system, the access network device 20 may be an evolved universal terrestrial radio access network (EUTRAN) or one or more eNodeBs in the EUTRAN; and in the 5G NR system, the access network device 20 may be a radio access network (RAN) or one or more gNBs in the RAN. In the embodiments of the present application, the "network device" mentioned herein, unless otherwise specified, refers to an access network device 20, e.g., a base station.

The core network device 30 is a device deployed in the core network. The core network device 30 has functions of mainly providing user connection and completing bearing of user management and service, and serves as a bearer network to provide an interface to an external network. For example, the core network device in the 5G NR system may include devices such as an access and mobility management function (AMF) entity, a user plane function (UPF) entity and a session management function(SMF) entity.

In some embodiments, the access network device 20 and the core network device 30 communicate with each other through some air interface technology such as an NG interface in the 5G NR system. The access network device 20 and the terminal device 10 communicate with each other through some air interface technology such as a Uu interface.

The "5G NR system" in the embodiments of the present application may also be referred to as a 5G system or an NR system, and those skilled in the art can understand its meaning. The technical solutions described in the embodiments of the present application may be applicable to the LTE system, may also be applicable to the 5G NR systems, may also be applicable to subsequent evolution systems of the 5G NR system, and may also be applicable to other communication systems such as a narrow band internet of things (NB-IoT) system, and the present application does not limit thereto.

In the embodiments of the present application, the network device may provide services for a cell, and the terminal device may communicate with the network device through transmission resources (e.g., frequency domain resources, or spectrum resources) on a carrier used by the cell. The cell may be a cell corresponding to the network device (e.g., a base station). The cell may belong to a macro base station or a base station corresponding to a small cell. Here, small cells may include: a metro cell, a micro cell, a pico cell, a femto cell, etc. These small cells have the characteristics of small coverage and low transmission power, and are suitable for providing high-speed data transmission services.

Before introducing the technical solutions of the present application, some background technical knowledge involved in the present application is first introduced and explained. The following related technologies may be arbitrarily combined with the technical solutions of the embodiments of the present application as optional solutions, and they all belong to the protection scope of the embodiments of the present application. The embodiments of the present application include at least part of the following contents.

### 1. DRX (Discontinuous Reception)

For the purpose of UE power saving, the related system supports the DRX transmission mechanism. The main principle is to implement discontinuous reception of signals in a time domain through semi-static configuration. In a case where there is no data transmission, power consumption may be reduced by stopping receiving a physical downlink control channel (PDCCH) (PDCCH blind detection will be stopped at this time).

The DRX configuration method is to configure a DRX cycle for a UE in an RRC (radio resource control) connected state (RRC_CONNECTED state). As shown in FIG. 2, the DRX cycle consists of "Active Time" and "Inactive Time (or called Dormancy Time)". During the "Active Time", the UE monitors and receives the PDCCH; and during the "Inactive Time", the UE does not receive the PDCCH to reduce power consumption.

### 2. Dormancy mode power saving

In the 5G and LTE evolution carrier aggregation/dual connectivity (CA/DC) projects, a dormancy mode supporting power-saving is also known as a hibernate mode. In the dormancy mode, the UE may ignore a PDCCH of one carrier or significantly reduce PDCCH monitoring on one carrier. At the same time, the UE only needs to maintain some basic channel measurement-based signal reception, such as uplink and downlink synchronization, and frequency calibration.

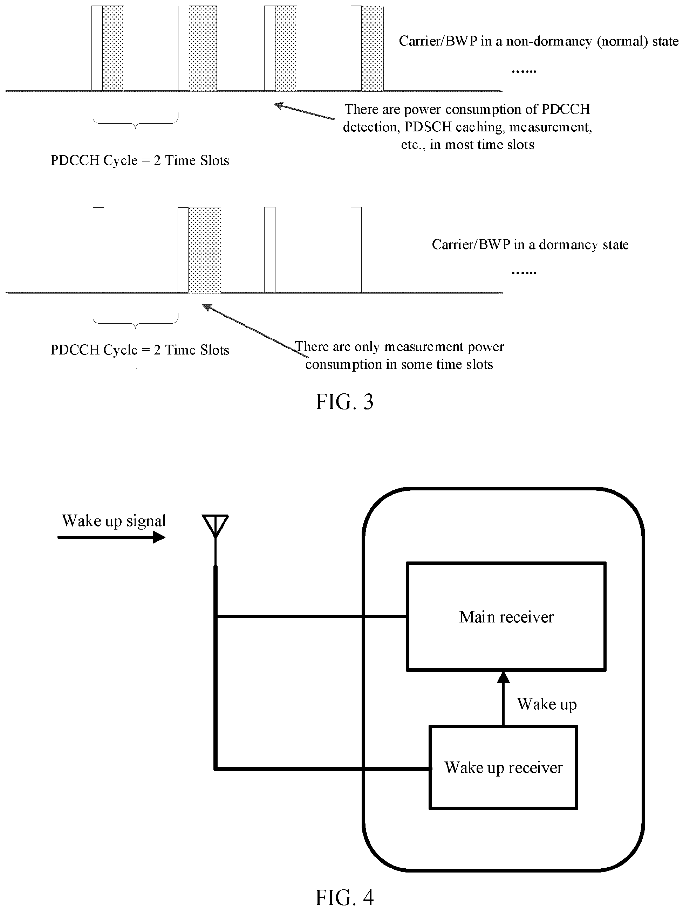

As shown in FIG. 3, which is a schematic diagram exemplarily showing saving power consumption in the dormancy mode, sub-figure (a) in FIG. 3 is a schematic diagram showing PDCCH detection on a carrier or bandwidth part (BWP) in a non-dormancy state, and sub-figure (b) in FIG. 3 is a schematic diagram showing PDCCH detection on a carrier or BWP in the dormancy state. In the non-dormancy state, there is power consumption for PDCCH detection, physical downlink shared channel (PDSCH) caching and measurement in most time slots; and in the dormancy state, there is power consumption for PDCCH detection in only some individual time slots, and the power consumption in the dormancy state may be significantly reduced.

In principle, the network device may adjust the dormancy state on a carrier-by-carrier basis based on the current system throughput. The mechanism by which NR adjusts the dormancy state of an auxiliary carrier is to switch to dormancy BWP or non-dormancy BWP to accordingly bring a certain carrier into the dormancy or non-dormancy state.

### 3. UE power saving based on a wake up receiver

In order to further save power of the UE, a wake up receiver (WUR) is considered to be introduced in related standards to receive a wake up signal. The wake up receiver is a deeper dormancy mode, has the characteristics of extremely low cost, extremely low complexity, and extremely low power consumption, and receives the wake up signal mainly through an envelope detection-based method. In other cases, it is not excluded to use a similar traditional receiver method. In short, a power consumption level of the wake up receiver is several orders of magnitude lower than the power consumption of the traditional dormancy mode. Generally, the power consumption of a traditional receiver is greater than 100 milliwatts, but that of the low-power receiver may be less than 1 milliwatt.

Therefore, the wake up signal (WUS) received by the wake up receiver is different from a signal defined in the standard and carried by the PDCCH in terms of a modulation mode and waveform. The wake up signal is an envelope signal that mainly performs amplitude shift keying (ASK) modulation on a carrier signal using. The demodulation of the envelope signal is also accomplished by driving a low-power circuit based mainly on the energy provided by a wireless radio frequency signal, so it may be passive. The wake up receiver may also be powered by the UE. Regardless of the power supply method, the receiver greatly reduces power consumption compared to the traditional receiver of the UE. The wake up receiver may be combined with the UE as an additional module of the UE receiver, or the wake up receiver may be used alone as a wake up function module of the UE.

The block diagram of a receiver system based on zero-power wake up is shown in FIG. 4. As shown in FIG. 4, the wake up receiver receives the wake up signal. If the UE needs to turn on the receiver, the UE may be instructed to turn on the main receiver; if not, the main receiver of the UE may be in a turned-off state.

The wake up receiver does not need to be turned on and off to save power like the traditional receiver, but may be activated by the WUS at any time and receive the wake up signal. The wake up signal is mainly the envelope signal that performs the ASK modulation on the carrier signal. For example, the WUS signal used in the 802.11 technology uses on-off keying (OOK) modulation. The modulation principle of the OOK is to modulate an amplitude of the carrier signal to a non-zero value and a zero value, corresponding to On and Off respectively, to represent information bits. The OOK is also known as amplitude shift keying (2ASK). For example, bit 1 is modulated as On and bit 0 is modulated as Off.

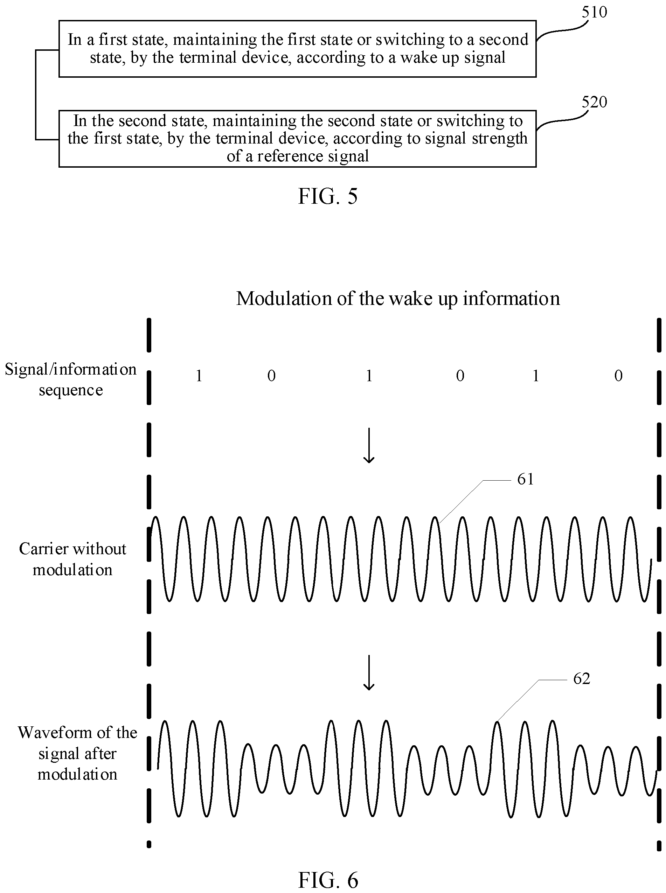

Please refer to FIG. 5, which is a flow chart of a state determination method provided by an embodiment of the present application, the method may be performed by the terminal device. The method may include at least one of the following steps 510 and 520.

Step 510: in a first state, maintaining the first state or switching to a second state, by the terminal device, according to a wake up signal.

Step 520: in the second state, maintaining the second state or switching to the first state, by the terminal device, according to signal strength of a reference signal.

In some embodiments, the first state and the second state are different. That is, the first state and the second state are two different states of the terminal device.

In some embodiments, the first state and the second state are different in at least one of the following cases 1 to 3.

Case 1: Power consumption of the first state and power consumption of the second state are different.

For example, the power consumption of the first state is less than the power consumption of the second state. For example, the first state may be referred to as a low power consumption state or a low power consumption transceiving state, and the second state may be referred to as a normal power consumption state or a normal transceiving state.

Case 2: A signal detection method of the first state and a signal detection method of the second state are different.

For example, in the first state, the terminal device detects the envelope signal modulated by ASK, but does not detect other signals than this envelope signal; and in the second state, the terminal device detects other signals. Here, the complexity of the signal detection method in the first state is lower than the complexity of the signal detection method in the second state.

Case 3: A signal receiving method of the first state and a signal receiving method of the second state are different.

For example, in the first state, the terminal device only measures or receives the wake up signal. In the second state, the terminal device performs at least one of the following actions: receiving a downlink synchronization signal, measuring or receiving a reference signal, receiving downlink control information, receiving downlink data, or the like. Optionally, in the second state, the terminal device further performs at least one of the following actions: transmitting an uplink reference signal, transmitting a random access request, transmitting uplink control information, transmitting uplink data, or the like.

In some embodiments, the terminal device includes a first receiver and a second receiver, in which the second receiver is configured to receive the wake up signal. In the first state, the first receiver is in a non-working state, and the second receiver is in a working state. In the second state, both the first receiver and the second receiver are in the working state.

Here, the first receiver and the second receiver are two different receivers. For example, the first receiver and the second receiver have different functions, such as being configured to receive different signals, having different signal detection methods, or having different signal receiving methods. In some embodiments, the capability of the first receiver is greater than the capability of the second receiver. In some embodiments, the power consumption of the first receiver is greater than the power consumption of the second receiver. In some embodiments, the first receiver may be the main receiver in FIG. 4, and the second receiver may be the wake up receiver in FIG. 4.

In some embodiments, the wake up signal is a signal generated by modulating a binary sequence. For example, the binary sequence is in a form of at least one of the following: a pseudo noise (PN) sequence, a Gold sequence, an M sequence, or a Hadamard sequence. For example, the modulation method includes at least one of the following: an amplitude modulation, a frequency modulation, or a phase modulation. FIG. 6 is a schematic diagram exemplarily showing the amplitude modulation for the wake up signal. Assuming that a signal or information sequence to be carried in the wake up signal is "101010", a waveform of the wake up signal without the amplitude modulation is shown as a waveform 61 in FIG. 6, and a waveform of the wake up signal after the amplitude modulation is shown as a waveform 62 in FIG. 6. It can be seen from the waveform 62 that different values of 0 and 1 are represented by different amplitudes.

In some embodiments, the wake up signal carries terminal identifier information, and the terminal identifier information is used to indicate one or more target terminal devices. For example, the terminal identifier information includes at least one of the following: a cell access identifier of the target terminal device, an access group identifier of the target terminal device, or an inherent identifier of the target terminal device. Here, the cell access identifier is an identifier used in the cell access process. For different terminal devices in a same cell, cell access identifiers are different and the different terminal devices in the same cell can be distinguished by the cell access identifiers. The access group identifier refers to an identifier of an access group. Different terminal devices in the same cell may be divided into multiple access groups, one access group may include at least one terminal device, and different access groups have different access group identifiers. The inherent identifier is used to distinguish different terminal devices. Different terminal devices have different inherent identifiers, for example, the inherent identifier may be a subscription permanent identifier (SUPI), a subscription concealed identifier (SUCI), a permanent equipment identifier (PEI), or the like.

For example, a cell corresponding to the network device includes a terminal device 1, a terminal device 2, a terminal device 3, a terminal device 4 and a terminal device 5. The network device broadcasts the wake up signal to the terminal devices in the cell. Target terminal devices indicated by the terminal identifier information carried in the wake up signal include the terminal device 1 and the terminal device 3. For example, the terminal identifier information may include a cell access identifier of the terminal device 1 and a cell access identifier of the terminal device 3.

In some embodiments, maintaining the first state or switching to the second state, by the terminal device, according to the wake up signal, includes: in a case where one or more target terminal devices indicated by the terminal identifier information carried in the wake up signal include the terminal device, switching, by the terminal device, to the second state. That is, in a case where the terminal device receives the wake up signal in the first state, and the one or more target terminal devices indicated by the terminal identifier information carried in the wake up signal include the terminal device, the terminal device switches from the first state to the second state. Optionally, in a case where the one or more target terminal devices indicated by the terminal identifier information carried in the wake up signal do not include the terminal device, the terminal device maintains the first state.

For example, the terminal device receives the wake up signal in a low power consumption state. If the wake up signal includes the identifier information of the terminal device, the terminal device switches to the normal power consumption state; if not, the terminal device maintains the low power consumption state.

In some embodiments, the wake up signal carries network identifier information, and the network identifier information is used to indicate one or more target cells. For example, the network identifier information is used to perform at least one of the following actions on a signal of the target cell: search, detection, or demodulation. That is, the terminal device may determine the target cell according to the network identifier information, and perform at least one of the following actions on the signal of the target cell: search, detection, or demodulation.

Optionally, the network identifier information and identifier information corresponding to the target cell have an association relationship therebetween. The terminal device determines the identifier information of the target cell corresponding to the network identifier information according to the network identifier information carried in the wake up signal and in combination with the corresponding relationship, thereby determining the one or more target cells indicated by the network identifier information. Here, the identifier information of the cell is used to distinguish different cells, and different cells correspond to different pieces of identifier information. Considering that an encoding method of the wake up signal may be different from an encoding method of an ordinary signal, and a sequence length that the wake up signal is capable of carrying may be limited, which may not reach a length required by the cell identifier information, through the above method, it is defined that there is the association relationship between the network identifier information and the identifier information corresponding to the target cell. By carrying shorter network identifier information in the wake up signal (for example, the number of bits or sequence length required for the network identifier information is less than the number of bits or sequence length required for the cell identifier information), it is possible to indicate the one or more target cells with shorter information in the wake up information.

In some embodiments, the identifier information corresponding to the target cell includes at least one of the following: a cell identifier (cell ID) corresponding to the target cell, or a beam identifier (beam ID) corresponding to the target cell.

Optionally, one piece of network identifier information is associated with one cell identifier, that is, one piece of network identifier information corresponds to one cell ID, so that the network identifier information is more flexible in indicating the cell; alternatively, one piece of network identifier information is associated with multiple cell identifiers, that is, one piece of network identifier information corresponds to multiple cell IDs, so that the multiple cells can be indicated by only one piece of network identifier information.

Optionally, one piece of network identifier information is associated with one beam identifier, that is, one piece of network identifier information corresponds to one beam ID, so that the network identifier information is more flexible in indicating the beam; alternatively, one piece of network identifier information is associated with multiple beam identifiers, that is, one piece of network identifier information corresponds to multiple beam IDs, so that the multiple beams can be indicated by only one piece of network identifier information. In addition, one cell may correspond to one or more beams.

In some embodiments, the terminal device selects a target cell for residence or access. For example, the terminal device receives the wake up signal in the low power consumption state. If the wake up signal includes the identifier information of the terminal device, the terminal device switches to the normal power consumption state; and if the wake up signal carries the network identifier information, the terminal device selects the target cell indicated by the network identifier information for residence or access. Optionally, if the network identifier information indicates one target cell, the terminal device selects this one target cell for residence or access; and if the network identifier information indicates multiple target cells, the terminal device selects one target cell from the multiple target cells for residence or access, such as in random selection, selection based on a signal quality, or other selection methods, which is not limited in the present application. Through the above method, in a case where the wake up signal is associated with the cell (i.e., the wake up signal carries the network identifier information), the terminal device may determine the target cell based on the network identifier information carried in the wake up signal, and directly reside or access the target cell without initiating a random access to the target cell, thereby improving the efficiency of the terminal device residing in or accessing the cell. Furthermore, if there is an associated relationship between the network identifier information carried in the wake up signal and the beam identifier corresponding to the target cell, after selecting the target cell for residence or access, the terminal device may directly select a beam indicated by the beam identifier corresponding to the target cell for reception and/or transmission.

In addition, if beams in different cells have different beam identifiers, the beam identifier corresponding to the target cell may indicate the target cell and the beam in the target cell, then the terminal device may determine the target cell and the beam in the target cell only based on the beam identifier corresponding to the target cell. If beams in different cells may have the same beam identifier, and different beams in the same cell have different beam identifiers, the terminal device may determine the target cell and the beam in the target cell based on the cell identifier corresponding to the target cell and the beam identifier corresponding to the target cell.

In some embodiments, if the one or more target terminal devices indicated by the terminal identifier information carried in the wake up signal include the terminal device, the terminal device initiates the random access. For example, the terminal device receives the wake up signal in the low power consumption state, and if the wake up signal includes the identifier information of the terminal device, the terminal device switches to the normal power consumption state and initiates the random access. Through the above method, in a case where the wake up signal is not associated with the cell (that is, the wake up signal does not carry the network identifier information), the terminal device switches from the low power consumption state to the normal power consumption state, and initiates the random access to implement cell access.

In some embodiments, in the first state, maintaining the first state or switching to the second state, by the terminal device, according to the wake up signal includes in the first state, maintaining the first state or switching to the second state, by the terminal device, according to signal strength of the wake up signal. For example, the following Case a, Case b or Case c may exist.

Case a: If the signal strength of the wake up signal is less than a first threshold value, the terminal device switches to the second state; if not, the terminal device maintains the first state. Here, the first threshold value is configurable, with the unit of dB (such as 0 dB, -3 dB, -6 dB, -9 dB, or -12 dB), or the unit of dBm (such as -20 dBm, -40d Bm, -60 dBm, or -80 dBm). The present application does not limit the specific value of the first threshold value.

Case b: If the signal strength of the wake up signal is greater than a second threshold value, the terminal device switches to the second state; if not, the terminal device maintains the first state. Here, the second threshold value is configurable, with the unit of dB or dBm. The embodiments of the present application do not limit the specific value of the second threshold value.

Case c: If the wake up signal is failed, the terminal device switches to the second state; if not, the terminal device maintains the first state. Here, the failure of the wake up signal means that the terminal device cannot measure the wake up signal, or the signal strength of the measured wake up signal is less than the first threshold value, and the first threshold value is configurable.

In some embodiments, the terminal device receives the wake up signal in the first state. If the one or more target terminal devices indicated by the terminal identifier information carried in the wake up signal include the terminal device, the terminal device further maintains the first state or switches to the second state based on the signal strength of the wake up signal. For example, the terminal device receives the wake up signal in the first state. If the one or more target terminal devices indicated by the terminal identifier information carried in the wake up signal include the terminal device, and the signal strength of the wake up signal is less than the first threshold value, the terminal device switches from the first state to the second state; if not (i.e., the one or more target terminal devices indicated by the terminal identifier information carried in the wake up signal do not include the terminal device, or the signal strength of the wake up signal is not less than the first threshold value), the terminal device maintains in the first state.

In some embodiments, in the second state, the terminal device maintains the second state or switches to the first state according to signal strength of the reference signal. Here, the reference signal includes but is not limited to at least one of the following: a synchronization signal block (SSB), a channel state information reference signal (CSI-RS), a tracking reference signal (TRS), a phase tracking reference signal (PT-RS), etc. For example, the following Case d, Case e, Case f, or Case g may exist.

Case d: If the signal strength of the reference signal is greater than a third threshold value, the terminal device switches to the first state; if not, the terminal device maintains the second state. Here, the third threshold value is configurable, with the unit of dB (such as 0 dB, -3 dB, -6 dB, -9 dB, or -12 dB), or the unit of dBm (such as -20 dBm, -40 dBm, -60 dBm, or -80 dBm). The present application does not limit the specific value of the third threshold value.

Case e: If the signal strength of the reference signal is less than a fourth threshold value, the terminal device switches to the first state; if not, the terminal device maintains the second state. Here, the fourth threshold value is configurable, with the unit of dB or dBm. The embodiments of the present application do not limit the specific value of the fourth threshold value.

Case f: If the reference signal is failed, the terminal device switches to the first state; if not, the terminal device maintains the second state. Here, the failure of the reference signal means that the terminal device cannot measure the reference signal, or the signal strength of the measured reference signal is less than the second threshold value, and the second threshold value is configurable.

Case g: If the reference signal is valid, the terminal device switches to the first state; if not, the terminal device maintains the second state.

In some embodiments, the above Case a and Case d may be combined. In the first state, the terminal device measures the wake up signal. If the signal strength of the wake up signal is less than the first threshold value, the terminal device switches to the second state; if not, the terminal device maintains the first state. In the second state, the terminal device measures the reference signal. If the signal strength of the reference signal is greater than the third threshold value, the terminal device switches to the first state; if not, the terminal device maintains the second state.

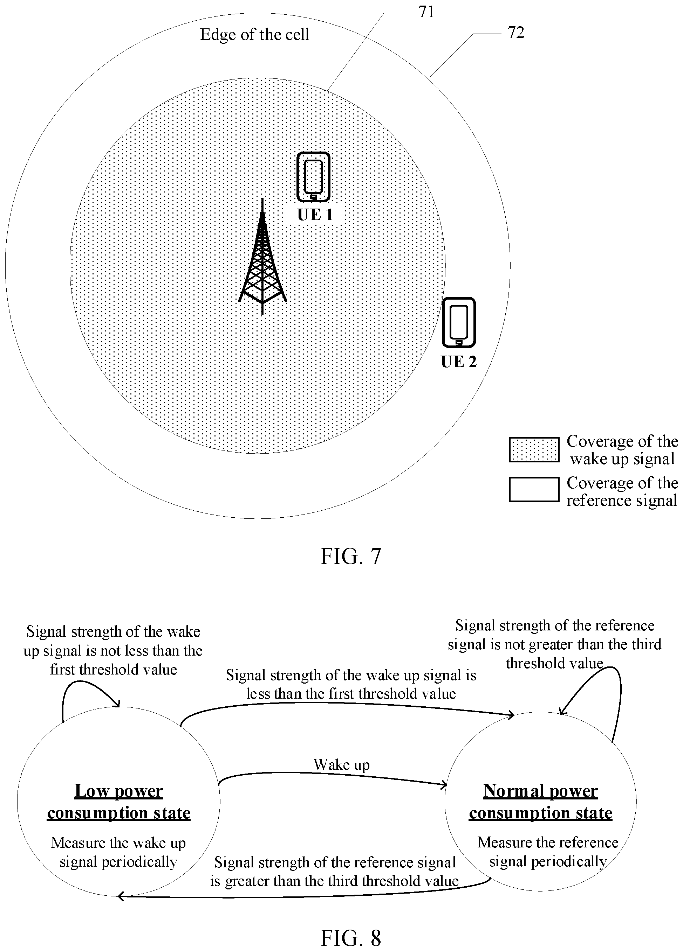

As shown in FIG. 7, which is a schematic diagram of the coverage of the wake up signal and the reference signal, the coverage 71 of the wake up signal transmitted by the network device (the area shown by the dotted fill in the figure, that is, the area within the small circle indicated by the sign 71) is less than the coverage 72 of the reference signal transmitted by the network device (the area shown by the dotted fill in the figure and the area shown by the white fill, that is, the area within the large circle indicated by the sign 72), or in other words, the coverage capability of the second receiver is less than the coverage capability of the first receiver. In the case shown in FIG. 7, the state transition diagram of the terminal device may be as shown in FIG. 8. In a case where the terminal device is in the low power consumption state, if the signal strength of the wake up signal measured by the terminal device is less than the first threshold value, it means that the terminal device is likely to be at the edge of the cell, e.g., at a location of UE 2 in the figure. In this case, the terminal device may switch from the low power consumption state to the normal power consumption state; and if the signal strength of the wake up signal measured by the terminal device is not less than the first threshold value, it means that the terminal device is not at the edge of the cell, e.g., at a location of UE 1 in the figure. In this case, the terminal device may maintain the low power consumption state. In a case where the terminal device is in the normal power consumption state, if the signal strength of the reference signal measured by the terminal device is greater than the third threshold value, it means that the terminal device is not at the edge of the cell, and the terminal device may be at the center of the cell or close to the center, e.g., at the location of the UE 1 in the figure. In this case, the terminal device may switch from the normal power consumption state to the low power consumption state; and if the signal strength of the reference signal measured by the terminal device is not greater than the third threshold value, it means that the terminal device may be at the edge of the cell, e.g., at the location of the UE 2 in the figure. In this case, the terminal device may maintain the normal power consumption state.

In some embodiments, the above Case b and Case e may be combined. In the first state, the terminal device measures the wake up signal. If the signal strength of the wake up signal is greater than the second threshold value, the terminal device switches to the second state; if not, the terminal device maintains the first state. In the second state, the terminal device measures the reference signal. If the signal strength of the reference signal is less than the fourth threshold value, the terminal device switches to the first state; if not, the terminal device maintains the second state.

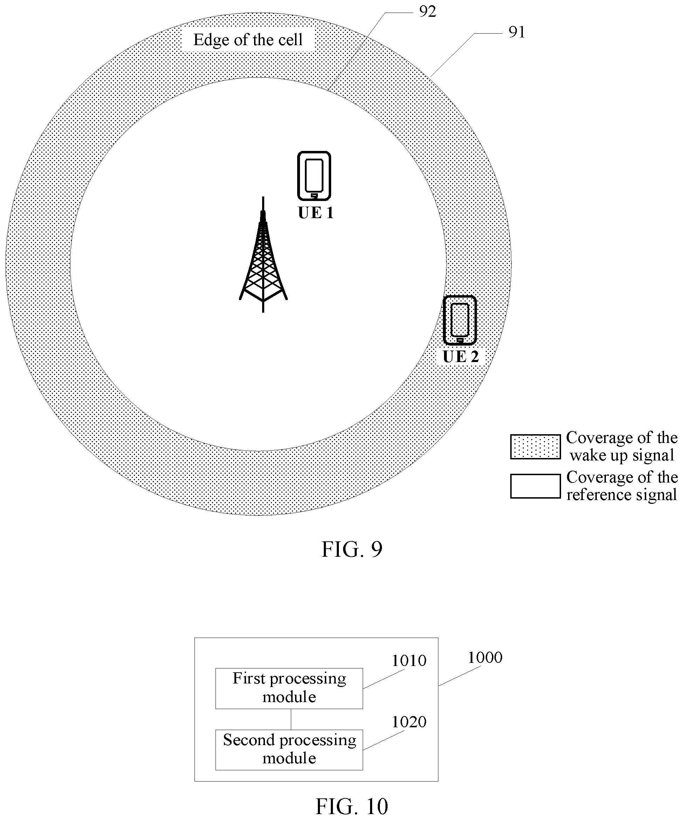

As shown in FIG. 9, the coverage 91 of the wake up signal transmitted by the network device (the area shown by the dotted fill and the area shown by the white fill in the figure, that is, the area within the large circle indicated by the sign 91) is greater than the coverage 92 of the reference signal transmitted by the network device (the area shown by the white fill in the figure, that is, the area within the small circle indicated by the sign 92), or in other words, the coverage capability of the second receiver is greater than the coverage capability of the first receiver. In a case where the terminal device is in the first state, if the signal strength of the wake up signal measured by the terminal device is greater than the second threshold value, it means that the terminal device is likely to be at the center or close to the center of the cell, e.g., at a location of UE 1 in the figure. In this case, the terminal device may switch from the first state to the second state; and if the signal strength of the wake up signal measured by the terminal device is not greater than the second threshold value, it means that the terminal device is likely to be at the edge of the cell, e.g., at a location of UE 2 in the figure. In this case, the terminal device may maintain the first state. In a case where the terminal device is in the second state, if the signal strength of the reference signal measured by the terminal device is less than the fourth threshold value, it means that the terminal device is likely to be at the edge of the cell, e.g., at the location of the UE 2 in the figure, and the terminal device may switch from the second state to the first state; and if the signal strength of the reference signal measured by the terminal device is not less than the fourth threshold value, it means that the terminal device is not at the edge of the cell, e.g., at the location of the UE 1 in the figure, and the terminal device may maintain the second state.

In the technical solutions provided by the embodiments of the present application, in the first state, the terminal device maintains the first state or switches to the second state according to the wake up signal; and in the second state, the terminal device maintains the second state or switches to the first state according to the signal strength of the reference signal. Thus, in different states, by receiving and measuring different target signals (such as the wake up signal or the reference signal), the terminal device may choose to enter a suitable state to achieve the purpose of power saving.

In addition, by measuring and decoding the wake up signal, it may be achieved that the wake up receiver of the terminal device may effectively receive the wake up signal. The terminal device may use the coverage difference between the wake up signal and the reference signal to measure the signal strength to choose to enter the appropriate state and measure a reasonable target signal (e.g., the wake up signal or the reference signal), thereby maximizing the use of the low power consumption characteristics of the wake up receiver of the terminal device and achieving better power saving effects.

The following are apparatus embodiments of the present application, which may be used to perform method embodiments of the present application. For details not disclosed in the apparatus embodiments of the present application, please refer to the method embodiments of the present application.

Please refer to FIG. 10, which is a block diagram of a state determination apparatus provided by an embodiment of the present application, the apparatus has functions of implementing the above method examples, and the functions may be implemented by hardware or by hardware executing corresponding software. The apparatus may be a terminal device described above, or may be arranged in the terminal device. As shown in FIG. 10, the apparatus 1000 may include: a first processing module 1010 and/or a second processing module 1020.

The first processing module 1010 is configured to, in a first state, maintain the first state or switch to a second state according to a wake up signal.

The second processing module 1020 is configured to, in the second state, maintain the second state or switch to the first state according to signal strength of a reference signal.

Here, the first state and the second state are different.

In some embodiments, the wake up signal carries terminal identifier information, and the terminal identifier information is used to indicate one or more target terminal devices.

In some embodiments, the terminal identifier information includes at least one of the following: a cell access identifier of the target terminal device, an access group identifier of the target terminal device, or an inherent identifier of the target terminal device.

In some embodiments, the first processing module 1010 is configured to, switch to the second state in a case where the one or more target terminal devices include the terminal device, and/or maintain the first state in a case where the one or more target terminal devices do not include the terminal device.

In some embodiments, the wake up signal carries network identifier information, and the network identifier information is used to indicate one or more target cells.

In some embodiments, the network identifier information is used to perform at least one of the following actions on a signal of the target cell: search, detection, or demodulation.

In some embodiments, the network identifier information and identifier information corresponding to the target cell have an association relationship therebetween.

In some embodiments, the identifier information corresponding to the target cell includes at least one of the following: a cell identifier corresponding to the target cell, or a beam identifier corresponding to the target cell.

In some embodiments, the first processing module 1010 is further configured to select a target cell for residence or access.

In some embodiments, the first processing module 1010 is further configured to initiate a random access in a case where the one or more target terminal devices include the terminal device.

In some embodiments, the first processing module 1010 is configured to, if signal strength of the wake up signal is less than a first threshold value, switch to the second state; if not, maintain the first state.

In some embodiments, the first processing module 1010 is configured to, if the signal strength of the wake up signal is greater than a second threshold value, switch to the second state; if not, maintain the first state.

In some embodiments, the first processing module 1010 is configured to, if the wake up signal is failed, switch to the second state; if not, maintain the first state.

In some embodiments, the second processing module 1020 is configured to, if signal strength of the reference signal is greater than a third threshold value, switch to the first state; if not, maintain the second state.

In some embodiments, the second processing module 1020 is configured to, if the signal strength of the reference signal is less than a fourth threshold value, switch to the first state; if not, maintain the second state.

In some embodiments, the second processing module 1020 is configured to, if the reference signal is failed, switch to the first state; if not, maintain the second state.

In some embodiments, the second processing module 1020 is configured to, if the reference signal is valid, switch to the first state; if not, maintain the second state.

In some embodiments, the wake up signal is a signal generated by modulating a binary sequence.

In some embodiments, the binary sequence includes at least one of the following: a PN sequence, a Gold sequence, an M sequence, or a Hadamard sequence.

In some embodiments, a modulation method includes at least one of the following: an amplitude modulation, a frequency modulation, or a phase modulation.

In some embodiments, the reference signal includes at least one of the following: an SSB, a CSI-RS, a TRS, or a PT-RS.

In some embodiments, the terminal device includes a first receiver and a second receiver, where the second receiver is configured to receive the wake up signal. In the first state, the first receiver is in a non-working state, and the second receiver is in a working state; and in the second state, both the first receiver and the second receiver are in the working state.

In some embodiments, the first state and the second state are different in at least one of the following manners: power consumption of the first state and power consumption of the second state are different; a signal detection method of the first state and a signal detection method of the second state is different; or a signal receiving method of the first state and a signal receiving method of the second state are different.

It will be noted that the apparatus provided in the above embodiments only uses the division of the above-mentioned functional modules as an example to implement its functions. In actual applications, the above-mentioned functions may be assigned to different functional modules according to actual needs, that is, the content structure of the device may be divided into different functional modules to complete all or part of the functions described above.

Regarding the apparatus in the above embodiments, the specific manners in which various modules perform operations have been described in detail in the embodiments of the method, and will not be repeated here.

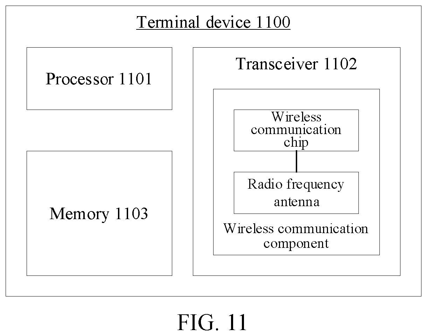

Please refer to FIG. 11, which is a schematic diagram of a structure of a terminal device provided in an embodiment of the present application, the terminal device 1100 may include: a processor 1101, a transceiver 1102, and a memory 1103.

The processor 1101 includes one or more processing cores. The processor 1101 executes various functional applications and information processing by running software programs and modules. For example, the processor 1101 is configured to implement the functions of the first processing module 1010 and the second processing module 1020 in the above-mentioned apparatus embodiments.

The transceiver 1102 may include a receiver and a transmitter. For example, the receiver and the transmitter may be implemented as a same wireless communication component, and the wireless communication component may include a wireless communication chip and a radio frequency antenna.

The memory 1103 may be connected to the processor 1101 and the transceiver 1102.

The memory 1103 may be configured to store a computer program executed by the processor, and the processor 1101 is configured to execute the computer program to implement various steps performed by the terminal device in the above method embodiments.

In addition, the memory 1103 may be implemented by any type of volatile (transitory) or non-volatile (non-transitory) storage device or a combination thereof, and the volatile or non-volatile storage devices include but are not limited to: a magnetic disk or an optical disk, an electrically erasable programmable read-only memory, an erasable programmable read-only memory, a static access memory, a read-only memory, a magnetic memory, a flash memory, and a programmable read-only memory.

In some embodiments, the processor 1101 is configured to, in the first state, maintain the first state or switch to the second state according to the wake up signal; and/or in the second state, maintain the second state or switch to the first state according to the signal strength of the reference signal; where the first state and the second state are different.

For details not described in detail in the embodiments, please refer to the above embodiments, which will not be repeated here.

The embodiments of the present application further provide a computer-readable storage medium, in which a computer program is stored. The computer program is used to be executed by a processor of a terminal device (including a zero-power consumption terminal) to implement the above-mentioned state determination method.

Optionally, the computer-readable storage medium may include: a read-only memory (ROM), a random-access memory (RAM), a solid state drives (SSD), an optical disk, or the like. Here, the random access memories may include a resistance random access memory (ReRAM) and a dynamic random access memory (DRAM).

The embodiments of the present application further provide a chip, which includes a programmable logic circuit and/or program instructions. When running on a terminal device (including a zero-power consumption terminal), the chip is configured to implement the above-mentioned state determination method.

The embodiments of the present application further provide a computer program product, which includes computer instructions, and the computer instructions are stored in a computer-readable storage medium. A processor of a terminal device reads the computer instructions from the computer-readable storage medium and executes the computer instructions to implement the above-mentioned state determination method.

It should be understood that the "indicate" mentioned in the embodiments of the present application may mean a direct indication or an indirect indication, or may represent that there is an associated relationship. For example, A indicates B, which may mean that A directly indicates B, for example, B may be obtained through A; alternatively, it may mean that A indirectly indicates B, for example, A indicates C, and B may be obtained through C; alternatively, it may mean that there is an association relationship between A and B.

In the description of the embodiments of the present application, the term "corresponding" may indicate a direct or indirect correspondence between two items; alternatively, it may represent that there is an association relationship between the two items; alternatively, it may represent that there is a relationship of indication and being indicated, configuration and being configured, or the like.

In some embodiments of the present application, "predefined" may be implemented by pre-saving corresponding codes, tables or other methods that can be used to indicate related information in devices (e.g., including terminal devices and network devices), and the present application does not limit its specific implementation method. For example, predefined may refer to that being defined in a protocol.

In some embodiments of the present application, the "protocol" may refer to a standard protocol in the communication field, for example, it may include an LTE protocol, an NR protocol, and related protocols used in future communication systems, which is not limited in the present application.

As used herein, the term "multiple" means two or more than two. The term "and/or" describes the association relationship of associated objects, indicating that three relationships may exist. For example, A and/or B may mean three cases: A alone, A and B both, and B alone. The character "/" generally indicates that the before and after associated objects are in an "or" relationship.

The term "less than" mentioned herein may be understood as less than, or may be understood as less than or equal to; and the term "greater than" mentioned herein may be understood as greater than, or may be understood as greater than or equal to.

In addition, the step numbers described in the present application only illustrate a possible execution order between the steps. In some other embodiments, the above steps may not be performed in the order of the numbers, such as two steps with different numbers are performed at the same time, or two steps with different numbers are performed in the opposite order to that shown in the figure. The embodiments of the present application are not limited thereto.

Those skilled in the art should be aware that, in one or more of the above examples, the functions described in the embodiments of the present application may be implemented by hardware, software, firmware or any combination thereof. When implemented using software, the functions may be stored in a computer-readable medium or transmitted as one or more instructions or codes on the computer-readable medium. The computer-readable medium includes a computer storage medium and a communication medium, in which the communication medium includes any medium that facilitates the transmission of a computer program from one place to another. The storage medium may be any available medium that capable of being accessed by a general purpose or special purpose computer.

The above description is only exemplary embodiments of the present application and is not intended to limit the present application. Any modifications, equivalent substitutions, improvements, etc., made within the spirit and principles of the present application shall be included in the protection scope of the present application.

## Claims

1. A state determination method, the method being performed by a terminal device and the method comprising:
in a first state, maintaining the first state or switching to a second state according to a wake up signal;
and/or
in the second state, maintaining the second state or switching to the first state according to signal strength of the reference signal;
wherein the first state and the second state are different.

2. The method according to claim 1, wherein the wake up signal carries terminal identifier information, and the terminal identifier information is used to indicate one or more target terminal devices.

3. The method according to claim 2, wherein the terminal identifier information comprises at least one of following: a cell access identifier of a target terminal device, an access group identifier of the target terminal device, or an inherent identifier of the target terminal device.

4. The method according to claim 2 or 3, wherein maintaining the first state or switching to the second state according to the wake up signal, comprises:
in a case where the one or more target terminal devices comprise the terminal device, switching to the second state;
and/or
in a case where the one or more target terminal devices do not comprise the terminal device, maintaining the first state.

5. The method according to any one of claims 1 to 4, wherein the wake up signal carries network identifier information, and the network identifier information is used to indicate one or more target cells.

6. The method according to claim 5, wherein the network identifier information is used to perform at least one of following actions on a signal of a target cell: search, detection, or demodulation.

7. The method according to claim 5 or 6, wherein the network identifier information and identifier information corresponding to a target cell have an association relationship therebetween.

8. The method according to claim 7, wherein the identifier information corresponding to the target cell comprises at least one of following: a cell identifier corresponding to the target cell, or a beam identifier corresponding to the target cell.

9. The method according to any one of claims 5 to 8, wherein the method further comprises:
selecting a target cell for residence or access.

10. The method according to any one of claims 2 to 4, wherein the method further comprises:
in a case where the one or more target terminal devices comprises the terminal device, initiating a random access.

11. The method according to any one of claims 1 to 10, wherein maintaining the first state or switching to the second state according to the wake up signal, comprises:
if signal strength of the wake up signal is less than a first threshold value, switching to the second state; and
if not, maintaining the first state.

12. The method according to any one of claims 1 to 10, wherein maintaining the first state or switching to the second state according to the wake up signal, comprises:
if the wake up signal is failed, switching to the second state; and
if not, maintaining the first state.

13. The method according to any one of claims 1 to 12, wherein maintaining the second state or switching to the first state according to the signal strength of the reference signal, comprises:
if the signal strength of the reference signal is greater than a third threshold value, switching to the first state; and
if not, maintaining the second state.

14. The method according to any one of claims 1 to 12, wherein maintaining the second state or switching to the first state according to the signal strength of the reference signal, comprises:
if the reference signal is failed, switching to the first state; and
if not, maintaining the second state.

15. The method according to any one of claims 1 to 14, wherein the wake up signal is a signal generated by modulating a binary sequence.

16. The method according to claim 15, wherein the binary sequence is in a form of at least one of following: a pseudo-noise (PN) sequence, a Gold sequence, an M sequence, or a Hadamard sequence.

17. The method according to claim 15 or 16, wherein a modulation method comprises at least one of following: an amplitude modulation, a frequency modulation, or a phase modulation.

18. The method according to any one of claims 1 to 17, wherein the reference signal comprises at least one of following: a synchronization signal block (SSB), a channel state information reference signal (CSI-RS), a tracking reference signal (TRS), or a phase tracking reference signal (PT-RS).

19. The method according to any one of claims 1 to 18, wherein the terminal device comprises a first receiver and a second receiver, and the second receiver is configured to receive the wake up signal;
in the first state, the first receiver is in a non-working state, and the second receiver is in a working state; and
in the second state, both the first receiver and the second receiver are in the working state.

20. The method according to any one of claims 1 to 19, wherein the first state and the second state are different in at least one of following manners:
that power consumption of the first state and power consumption of the second state are different;
that a signal detection method of the first state and a signal detection method of the second state are different; or
that a signal receiving manner of the first state and a signal receiving manner of the second state are different.

21. A state determination apparatus, the apparatus comprising:
a first processing module, configured to, in a first state, maintain the first state or switch to a second state according to a wake up signal;
and/or
a second processing module, configured to, in a second state, maintain the second state or switch to the first state according to signal strength of a reference signal;
wherein the first state and the second state are different.

22. The apparatus according to claim 21, wherein the wake up signal carries terminal identifier information, and the terminal identifier information is used to indicate one or more target terminal devices.

23. The apparatus according to claim 22, wherein the terminal identifier information comprises at least one of following: a cell access identifier of a target terminal device, an access group identifier of the target terminal device, or an inherent identifier of the target terminal device.

24. The apparatus according to claim 22 or 23, wherein the first processing module is configured to:
in a case where the one or more target terminal devices comprise the terminal device, switch to the second state;
and/or
in a case where the one or more target terminal devices do not comprise the terminal device, maintain the first state.

25. The apparatus according to any one of claims 21 to 24, wherein the wake up signal carries network identifier information, and the network identifier information is used to indicate one or more target cells.

26. The apparatus according to claim 25, wherein the network identifier information is used to perform at least one of following actions on a signal of a target cell: search, detection, or demodulation.

27. The apparatus according to claim 25 or 26, wherein the network identifier information and identifier information corresponding to a target cell have an association relationship therebetween.

28. The apparatus according to claim 27, wherein the identifier information corresponding to the target cell comprises at least one of following: a cell identifier corresponding to the target cell, or a beam identifier corresponding to the target cell.

29. The apparatus according to any one of claims 25 to 28, wherein
the first processing module is further configured to select a target cell for residence or access.

30. The apparatus according to any one of claims 22 to 24, wherein
the first processing module is further configured to, in a case where the one or more target terminal devices comprise the terminal device, initiate a random access.

31. The apparatus according to any one of claims 21 to 30, wherein the first processing module is configured to:
if signal strength of the wake up signal is less than a first threshold value, switch to the second state; and
if not, maintain the first state.

32. The apparatus according to any one of claims 21 to 30, wherein the first processing module is configured to:
if the wake up signal is failed, switch to the second state; and
if not, maintain the first state.

33. The apparatus according to any one of claims 21 to 32, wherein the second processing module is configured to:
if the signal strength of the reference signal is greater than a third threshold value, switch to the first state; and
if not, maintain the second state.

34. The apparatus according to any one of claims 21 to 32, wherein the second processing module is configured to:
if the reference signal is failed, switch to the first state; and
if not, maintain the second state.

35. The apparatus according to any one of claims 21 to 34, wherein the wake up signal is a signal generated by modulating a binary sequence.

36. The apparatus according to claim 35, wherein the binary sequence is in a form of at least one of following: a pseudo-noise (PN) sequence, a Gold sequence, an M sequence, or a Hadamard sequence.

37. The apparatus according to claim 35 or 36, wherein a modulation method comprises at least one of following: an amplitude modulation, a frequency modulation, or a phase modulation.

38. The apparatus according to any one of claims 21 to 37, wherein the reference signal comprises at least one of following: a synchronization signal block (SSB), a channel state information reference signal (CSI-RS), a tracking reference signal (TRS), or a phase tracking reference signal (PT-RS).

39. The apparatus according to any one of claims 21 to 38, wherein the terminal device comprises a first receiver and a second receiver, and the second receiver is configured to receive the wake up signal;
in the first state, the first receiver is in a non-working state, and the second receiver is in a working state; and
in the second state, both the first receiver and the second receiver are in the working state.

40. The apparatus according to any one of claims 21 to 39, wherein the first state and the second state are different in at least one of following manners:
that power consumption of the first state and power consumption of the second state are different;
that a signal detection method of the first state and a signal detection method of the second state are different; or
that a signal receiving manner of the first state and a signal receiving manner of the second state are different.

41. A terminal device, comprising a processor and a memory, wherein the memory stores a computer program therein, and the processor executes the computer program to implement the method according to any one of claims 1 to 20.

42. A computer-readable storage medium, wherein a computer program is stored in the storage medium, and the computer program is used to be executed by a processor to implement the method according to any one of claims 1 to 20.

43. A chip, comprising a programmable logic circuit and/or program instructions, when being running, the chip being used to implement the method according to any one of claims 1 to 20.

44. A computer program product, comprising computer instructions, wherein the computer instructions are stored in a computer-readable storage medium, and a processor reads the computer instructions from the computer-readable storage medium and executes the computer instructions to implement the method according to any one of claims 1 to 20.
